# FASCICULE DE BREVET EUROPEEN

(11) **EP 4 003 937 B1**
(45) Date de publication et mention de la délivrance du brevet: **23.08.2023**
(21) Numéro de dépôt: 20735403.6
(22) Date de dépôt: 02.07.2020
(51) Int. Cl.: C04B 35/645, C04B 35/56

(54) **PIÈCE DENSE EN MATÉRIAU COMPOSITE CÉRAMIQUE-CÉRAMIQUE TERNAIRE ET SON PROCÉDÉ DE FABRICATION**
DICHTES TEIL AUS EINEM TERNÄREN KERAMIK-KERAMIK-VERBUNDWERKSTOFF UND VERFAHREN ZU SEINER HERSTELLUNG
DENSE PART MADE OF A TERNARY CERAMIC-CERAMIC COMPOSITE MATERIAL AND METHOD FOR MANUFACTURING SAME

(30) Priorité: 26.07.2019 FR 1908522
(43) Date de publication de la demande: 01.06.2022
(73) Titulaire: Industries Micromecaniques Internationales (IMI), 25480 Ecole Valentin (FR); SINTERMAT, 21150 Venarey-les-Laumes (FR)
(72) Inventeur: MORLOT, Christophe, 25320 ABBANS DESSOUS (FR); NAIMI, Foad, 21150 VENAREY LES LAUMES (FR)
(74) Mandataire: Novagraaf Technologies
(86) Numéro de dépôt international: PCT/EP2020/068710
(87) Numéro de publication internationale: WO 2021/018512

(56) Documents cités:
- FR-A5- 2 072 265
- ZOU BIN ET AL: "Effects of Al2O3and NbC additives on the microstructure and mechanical properties of TiB2-TiC composite ceramic cutting tool mater", CERAMICS INTERNATIONAL, ELSEVIER, AMSTERDAM, NL, vol. 40, no. 2, 27 septembre 2013 (2013-09-27), pages 3667-3677, XP028791169, ISSN: 0272-8842, DOI: 10.1016/J.CERAMINT.2013.09.058
- ALECRIM L R R ET AL: "Effect of reinforcement NbC phase on the mechanical properties of Al2O3-NbC nanocomposites obtained by spark plasma sintering", INTERNATIONAL JOURNAL OF REFRACTORY METALS AND HARD MATERIALS, ELSEVIER, AMSTERDAM, NL, vol. 64, 3 novembre 2016 (2016-11-03), pages 255-260, XP029931275, ISSN: 0263-4368, DOI: 10.1016/J.IJRMHM.2016.10.021

## Description

La présente invention concerne de manière générale la réalisation par un procédé de frittage d'une pièce en matériau composite céramique-céramique ternaire TiC-NbC-Al₂O₃ avec comme constituant majoritaire le carbure de titane. Ce matériau est notamment destiné à applications dans le domaine du luxe (horlogerie, bijouterie, accessoires, maroquinerie, instruments d'écriture...), la connectique, ou encore des applications dans le domaine médical (équipements ou implants).

Pour de telles applications, les recherches sont généralement orientées vers des pièces en matériau très dur avec un bon comportement mécanique en sollicitations et notamment en résistance aux chocs.

La catégorie des matériaux composites céramique-céramique présente l'avantage d'une dureté élevée (induisant une résistance élevée à l'usure), d'une résistance importante à la température et la pression ainsi qu'une très bonne résistance dans le temps aux environnements agressifs. Mais ces matériaux ne sont pas connus pour présenter une ténacité élevée.

Or, il est difficile d'obtenir des matériaux à la fois durs et tenaces.

Pour résoudre cette difficulté, le Demandeur a mis au point un procédé de frittage par pressage permettant d'atteindre une pièce présentant cet objectif à partir d'un mélange pulvérulent d'alumine (Al₂O₃), de carbure de niobium (NbC) et de 74 à 95% massique de carbure de titane (TiC) par rapport au poids du mélange. Le carbure de titane (TiC) appartient à la famille des carbures métalliques interstitiels. Le matériau ainsi obtenu présente l'avantage d'être durs tout en présentant un meilleur comportement mécanique global en sollicitation (ténacité).

L'utilisation de composites céramique-céramique à base de TiC, NbC et Al₂O₃ est connue dans le domaine médical, et notamment celui des implants. Ainsi, par exemple, le brevet américain US 9,107,980 décrit un implant orthopédique constitué d'un composite céramique-céramique comprenant une phase biocompatible et une seconde phase constituée de particules de céramique à base de carbures (et notamment de TiC ou NbC), nitrures ou d'oxydes (notamment d'Al₂O₃). Le brevet américain US 9,107,980 n'enseigne absolument pas un composite céramique-céramique dans lequel le carbure de titane est un composant majoritaire. De plus, aucune information n'est renseignée concernant la dureté de l'implant orthopédique objet de ce brevet.

Par ailleurs, l'utilisation de composites céramique-céramique à base de carbure de titane et de carbure de Niobium est connue comme pour les outils de coupe.

Ainsi, par exemple la demande de brevet chinois CN106756411 décrit une céramique métallique à haute résistance utilisée pour couper une feuille de métal non ferreux. Cette céramique est réalisée à partir d'un mélange pulvérulent contenant du carbure de titane (TiC), du carbure de niobium (NbC) ainsi que du molybdène et du nickel, dans lequel la proportion de carbure de titane est comprise entre 44 et 46% et celle de carbure de niobium entre 0,8 et 1,2%. La demande de brevet chinois CN106756411 n'enseigne pas un composite céramique-céramique dans lequel le carbure de titane serait un composant majoritaire. En outre, rien n'est stipulé également concernant la dureté de cette céramique. FR2072265A5 divulgue un article de joaillerie constitué d'une composition polie dure.

Classiquement dans la mise en oeuvre des carbures et autres matériaux métallo-céramique, la fabrication se fait par pressage à chaud nécessitant des liants comme le nickel, le molybdène ou le chrome (liste non exhaustive). Ces liants aident à la manipulation des poudres ainsi qu'à leur mise en forme mais peuvent présenter des risques pour la santé ou de relargage dans le temps limitant le champ des applications.

Pour s'affranchir des inconvénients précités et réaliser une pièce présentant les propriétés cibles (en lien avec la famille des matériaux métallo-céramique) pour les applications visées, le demandeur a mis au point une pièce en matériau composite céramique-céramique ternaire TiC-NbC-Al₂O₃, caractérisé en ce qu'elle est constituée de TiC à raison de 74% à 95% en poids par rapport au poids total dudit matériau, NbC à raison de 0,1% à 5% en poids par rapport au poids total dudit matériau, et de Al₂O₃ à raison de 1 à 25% en poids par rapport au poids total dudit matériau. Cette pièce en matériau composite céramique-céramique ternaire TiC-NbC-Al₂O est exempte de tout liant, et notamment de liant métallique aidant à la mise en forme.

Dans le cadre de la présente invention, le carbure de titane TiC, présent à raison de 74% à 95% en poids, est donc utilisé à titre d'élément matriciel et non comme élément d'adjonction comme c'est généralement le cas dans le cas de matériaux cermet avec du TiC.

Le choix des trois constituants a été fait principalement selon les critères suivants : TiC pour sa masse volumique et ses propriétés mécaniques, NbC pour son gain en ténacité, et Al₂O₃ pour sa dureté.

De manière avantageuse, la pièce avec le matériau précité selon l'invention présente une dureté Vickers égale ou supérieure à 1700 HV, et de préférence égale ou supérieure à 2000 HV. La mesure de la dureté Vickers est réalisée selon la norme ISO6507, avec un pénétrateur pyramidal (avec un angle au sommet entre les faces de 136°) et pressé avec une charge d'essai de 10 kg contre l'échantillon.

De manière avantageuse, la pièce selon l'invention peut présenter une ténacité K1c comprise entre 5 et 7 MPa.m^{1/2} lorsqu'elle est sollicitée en traction.

Par ténacité, on entend, au sens de la présente invention la capacité d'un matériau à résister à la propagation d'une fissure. La ténacité est évaluée expérimentalement à partir d'une pièce selon l'invention pré-fissurée que l'on soumet, à une sollicitation pour obtenir le facteur K1c d'intensité de contrainte.

De manière avantageuse, la pièce selon l'invention peut présenter une porosité inférieure à 1%, et de préférence inférieure ou égale à 0,2%.

La présente invention a également pour objet un procédé de fabrication d'une pièce (1) en matériau composite céramique-céramique selon l'invention, qui comporte une étape de chauffage jusqu'à la température de frittage, puis une étape de frittage à ladite température de frittage ainsi atteinte, par pressage à chaud de type SPS (frittage flash) d'un mélange pulvérulent constitué de TiC à raison de 74% à 95% en poids par rapport au poids total dudit matériau, NbC à raison de 0,1 % à 5% en poids par rapport au poids total dudit matériau, et Al₂O₃ à raison de 1 à 25% en poids par rapport au poids total dudit matériau, suivie d'une étape de refroidissement, ledit procédé étant caractérisé en ce que
- le frittage est un frittage SPS, qui est réalisé à la température de frittage, qui est comprise entre 1450°C et 2150°C, et sous une pression de 10 à 200 MPa ;
- le refroidissement est contrôlé jusque 800°C, avec une vitesse de refroidissement inférieure ou égale à 100°C/min avec maintien de la contrainte de pressage.

Le procédé selon l'invention ne nécessite aucun ajout de liant aux trois composés précités.

La gamme de variation de la pression est applicable pour réaliser des pièces de toute forme, et notamment des pièces de forme cylindrique avec un diamètre pouvant varier de 20 mm à 300 mm avec une épaisseur pouvant varier de 2 mm à 200 mm.

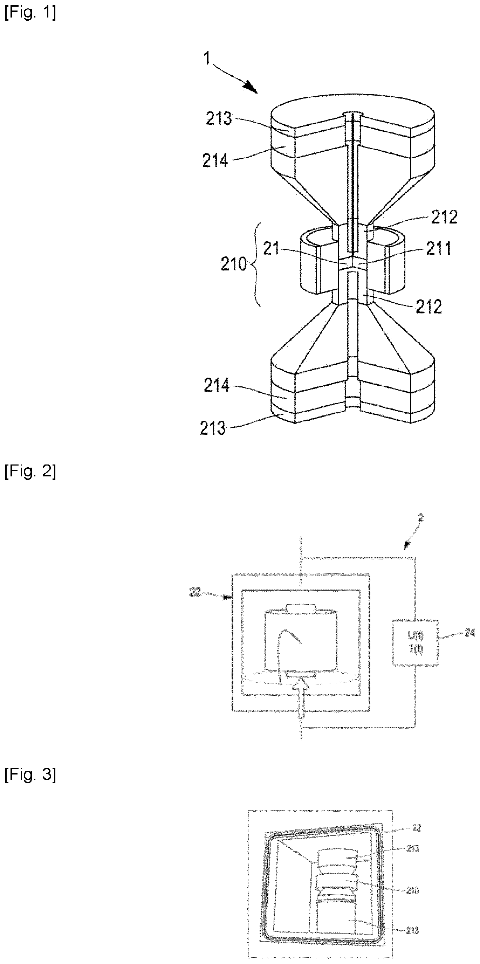

Par procédé de frittage SPS (acronyme en langue anglaise pour « *Spark Plasma Sintering* »), on entend, au sens de la présente invention un procédé de frittage «*Flash*». Ce procédé est illustré sur les figures 1 et 2 (voir ci-après).

De manière avantageuse, le pressage à chaud peut être un pressage uniaxial.

De manière avantageuse, la vitesse de montée en température peut être comprise entre 20°C/min et 600°C/min, et de préférence entre 50°C/min et 150°C/min.

De manière avantageuse, le frittage peut être réalisé à une température comprise entre 1600 et 1900°C,

De manière avantageuse, le frittage peut être réalisé à une pression de 40 à 100 MPa.

D'autres avantages et particularités de la présente invention résulteront de la description qui va suivre, donnée à titre d'exemple non limitatif et faite en référence aux figures annexées :
[Fig. 1] représente une vue schématique en coupe longitudinale d'un outil de pressage en graphite à deux pistons et une cavité (pour l'échantillon) destinée à être insérée dans un dispositif de frittage SPS (tel que notamment représenté sur la figure 2A) ;
[Fig. 2] est un schéma de principe d'un exemple de dispositif de frittage SPS pour la mise en oeuvre du procédé selon l'invention, dans lequel est inséré l'outil de pressage illustré sur la figure 1, avec une mise en situation lors d'un cycle de chauffage ;
[Fig. 3] est une photographie du dispositif de frittage SPS schématiquement illustré sur la figure 1. Il s'agit du dispositif de frittage SPS décrit dans la thèse de doctorat de M. Foad Naïmi « Approches scientifiques et technologiques du frittage et de l'assemblage de matériaux métalliques par SPS », soutenue le 26-11-2013 à Dijon.

En référence aux Fig. 1 et Fig. 2, le dispositif 2 de frittage SPS utilisé dans le cadre des exemples comprend :
un outil de pressage 21 (illustré sur la figure 1) comportant :
   une matrice de compression 210, essentiellement en graphite, comportant au moins une cavité 211 (typiquement de forme cylindrique mais qui peut être de toute forme) destinée à contenir un mélange pulvérulent 11 à compacter, et deux pistons (pouvant être en graphite) 212 pour confiner le mélange pulvérulent dans la cavité 211 ;
   deux pistons de compression 213 électriquement conducteurs entre lesquels est disposée la matrice de compression 210 ; et
   deux disques 214 en composite C/C ;
une enceinte refroidie par eau 22 contenant ledit outil de pressage 21 ;
un système de presse hydraulique pour appliquer une pression sur les pistons de compression 213 ; et
des moyens de chauffage 24 consistant à appliquer un courant à la matrice de compression 210.

La technologie SPS permet d'appliquer à l'ensemble, simultanément un courant électrique de fort ampérage et une charge (qui est essentiellement uniaxiale si l'on utilise le dispositif 2 tel qu'illustré sur Fig. 1 à Fig. 3). La mise en oeuvre de ce dispositif 2 de frittage SPS est détaillée ci-après dans les exemples de réalisation qui vont suivre.

### EXEMPLES

### Équipement

Dispositif de frittage SPS tel qu'illustré sur Fig. 1 à Fig. 3, et en particulier le dispositif commercialisé par la société FCT Système GmbH de marque FCT.

### Produits

1^{er} exemple de mélange pulvérulent 21 selon l'invention comprenant 95% à en poids de TiC (carbure de titane), 0,1% à 4,9 % en poids de NbC (carbure de niobium) et 0,1% à 4,9 % en poids d'Al₂O₃ (alumine).
2^{ème} exemple de mélange pulvérulent 21 selon l'invention comprenant 75% à en poids de TiC (carbure de titane), 0,1% à 5% en poids de NbC (carbure de niobium) et 20 à 24,9 % en poids d'Al₂O₃ (alumine).

### Tests

Mesure de la dureté : on évalue la dureté Vickers selon la norme ISO6507, avec un pénétrateur pyramidal (avec un angle au sommet entre les faces de 136°) et pressé avec une charge d'essais de 10 kg contre l'échantillon.

Mesure de la porosité : on évalue la porosité à l'aide d'un pycnomètre à hélium.

Mesure de la ténacité : La ténacité est évaluée expérimentalement à partir d'une pièce selon l'invention pré-fissurée que l'on soumet, dans le cadre de la présente invention, à une sollicitation pour obtenir le facteur K1c d'intensité de contrainte.

### EXEMPLE 1 :

Le 1^{er} exemple de mélange pulvérulent 21 décrit ci-dessus est disposé dans la cavité 211 de la matrice de compression 210 essentiellement en graphite, du dispositif de frittage SPS 2. On procède ensuite au frittage de ce mélange conformément au procédé selon l'invention, en chauffant simultanément le mélange réalisé à une température comprise entre 1600°C et 1900°C et le comprimant sous une pression entre 40 et 100 MPa. Le chauffage est assuré par le passage d'un courant électrique, de forte intensité (2 à 8 kA) et de basse tension (5 à 8 V), à travers les électrodes de la presse, les pistons 212, la matrice 210 (essentiellement en graphite) et également l'échantillon 21 lui-même lorsque celui-ci est conducteur, alors que la mise en température du système est assurée par une source externe de chaleur lors d'un frittage conventionnel. La vitesse de montée en température dans le procédé selon l'invention est ici de l'ordre de 50 à 150°C/min. Puis, après un maintien à la température de frittage, on procède au refroidissement avec une vitesse de refroidissement égale ou inférieure à 100°C/min sous contrainte jusque 800°C.

On obtient à l'issue du frittage une pièce sous forme d'une pastille de diamètre 50 mm et d'épaisseur 10 mm ne présentant aucune porosité de surface ou à coeur, une dureté supérieure à 2000 HV et une valeur de ténacité supérieure à 5 MPa.m^{1/2}.

### EXEMPLE 2:

Le 2^{ème} exemple de mélange pulvérulent 21 décrit ci-dessus est disposé dans la cavité 211 de la matrice de compression 210. On procède ensuite au frittage de ce mélange conformément au procédé selon l'invention, de la même manière qu'à l'exemple 1 (vitesses de chauffage et de refroidissement identique et température de frittage également identique.

On obtient à l'issue du frittage une pièce sous forme d'une pastille de diamètre 50 mm et d'épaisseur 10 mm ne présentant aucune porosité de surface ou à coeur, une dureté supérieure à 2000 HV et une ténacité supérieure à 5 MPa.m^{1/2}.

### EXEMPLE COMPARATIF 1 :

Dans la publication correspondant au mémoire de magister de Mme Hadda REZZAG relative à la « Synthèse et Caractérisation des mélanges de poudres céramiques à base de TIC-Al2O3 destinés à la compaction à chaud », soutenue en 2010 à l'Université Badji Mokhta Annaba, de la République Algérienne Démocratique et populaire (REF MG228 - https://library.crti.dz/ma228/documents), un matériau composite céramique-céramique binaire TiC - Al₂O₃, sans NbC et obtenu par pressage à chaud présente une dureté comprise entre 1950 et 2161 HV.

### EXEMPLE COMPARATIF 2 :

Dans la publication scientifique « Titanium carbonitride-zirconia composite: formation and characterization » de E. Barbier et F. Thevenot dans Journal of the European Ceramic Society, Volume 8, Issue 5, 1991, pages 263-269, différents composites de carbonitrure de titane et d'oxyde de zirconium ont été réalisés par simple pressage à chaud. Ces composites présentent une ténacité K1c comprise entre 4 et 5 MPa.m^{1/2}.

## Revendications

1. Pièce (1) en matériau composite céramique-céramique ternaire TiC-NbC-Al₂O₃, **caractérisée en ce qu'**elle est constituée de TiC à raison de 74% à 95% en poids par rapport au poids total dudit matériau, NbC à raison de 0,1% à 5% en poids par rapport au poids total dudit matériau, et Al₂O₃ à raison de 1 à 25% en poids par rapport au poids total dudit matériau.

2. Pièce (1) selon la revendication 1, présentant une dureté Vickers égale ou supérieure à 1700 HV, de préférence égale ou supérieure à 2000 HV.

3. Pièce (1) selon la revendication 1, présentant une porosité inférieure à 1%, et de préférence inférieure ou égale à 0,2%.

4. Pièce (1) selon la revendication 1, présentant une ténacité K1c comprise entre 5 et 7 MPa.m^{1/2}.

5. Procédé de fabrication d'une pièce (1) en matériau composite céramique-céramique selon l'une quelconque des revendications 1 à 5, qui comporte une étape de chauffage jusqu'à la température de frittage, puis une étape de frittage à ladite température de frittage ainsi atteinte, par pressage à chaud de type SPS (frittage flash) d'un mélange pulvérulent constitué de TiC à raison de 74% à 95% en poids par rapport au poids total dudit matériau, NbC à raison de 0,1% à 5% en poids par rapport au poids total dudit matériau, et Al₂O₃ à raison de 1 à 25% en poids par rapport au poids total dudit matériau, suivie d'une étape de refroidissement,
ledit procédé étant **caractérisé en ce que**
- le frittage est un frittage SPS, qui est réalisé à la température de frittage, qui est comprise entre 1450°C et 2150°C, et sous une pression de 10 à 200 MPa ;
- le refroidissement est contrôlé jusque 800°C, avec une vitesse de refroidissement inférieure ou égale à 100°C/min avec maintien de la contrainte de pressage.

6. Procédé selon la revendication 5, selon lequel le pressage à chaud est un pressage uniaxial.

7. Procédé selon la revendication, dans lequel la vitesse de montée en température est comprise entre 20°C/min et 600°C/min, et de préférence comprise entre 50°C/min et 150°C/min.

8. Procédé selon la revendication 6, dans lequel le frittage est réalisé à une température comprise entre 1600 et 1900°C.

9. Procédé selon la revendication 6, dans lequel le frittage est réalisé à une pression de 40 à 100 MPa.

## Patentansprüche

1. Teil (1) aus ternärem Keramik-Keramik-Verbundwerkstoff TiC-NbC-Al₂O₃, **dadurch gekennzeichnet, dass** es aus TiC in einer Menge von 74 % bis 95 % nach Gewicht bezogen auf das Gesamtgewicht des Werkstoffs, NbC in einer Menge von 0,1 % bis 5 % nach Gewicht bezogen auf das Gesamtgewicht des Werkstoffs und Al₂O₃ in einer Menge von 1 bis 25 % nach Gewicht bezogen auf das Gesamtgewicht des Werkstoffs besteht.

2. Teil (1) nach Anspruch 1, das eine Vickers-Härte gleich oder größer als 1700 HV, vorzugsweise gleich oder größer als 2000 HV aufweist.

3. Teil (1) nach Anspruch 1, das eine geringere Porosität als 1 %, vorzugsweise geringer als oder gleich 0,2 %, aufweist.

4. Teil (1) nach Anspruch 1, das eine Festigkeit K1c zwischen 5 und 7 MPa.m^{1/2} aufweist.

5. Verfahren zum Herstellen eines Teils (1) aus Keramik-Keramik-Verbundwerkstoff nach einem der Ansprüche 1 bis 5, das einen Schritt zum Erhitzen bis zu einer Sintertemperatur, anschließend einen Schritt zum Sintern bei der folglich erreichten Sintertemperatur durch Heißpressen einer SPS-Art (Flashsintern) einer Pulvermischung, die aus TiC in einer Menge von 74 % bis 95 % nach Gewicht bezogen auf das Gesamtgewicht des Werkstoffs, NbC in einer Menge von 0,1 % bis 5 % nach Gewicht bezogen auf das Gesamtgewicht des Werkstoffs und Al₂O₃ in einer Menge von 1 bis 25 % nach Gewicht bezogen auf das Gesamtgewicht des Werkstoffs besteht, gefolgt von einem Schritt zum Abkühlen beinhaltet,
wobei das Verfahren **dadurch gekennzeichnet ist, dass**
- das Sintern ein SPS-Sintern ist, das bei der Sintertemperatur, die zwischen 1450 °C und 2150 °C liegt, und unter einem Druck von 10 bis 200 MPa durchgeführt wird;
- das Abkühlen bis 800 °C mit einer Abkühlungsgeschwindigkeit geringer als oder gleich 100 °C/min mit Aufrechterhaltung der Pressbelastung gesteuert wird.

6. Verfahren nach Anspruch 5, wobei das Heißpressen ein uniaxiales Pressen ist.

7. Verfahren nach Anspruch, wobei die Temperaturanstiegsgeschwindigkeit zwischen 20 °C/min und 600 °C/min, vorzugsweise zwischen 50 °C und 150 °C liegt.

8. Verfahren nach Anspruch 6, wobei das Sintern bei einer Temperatur zwischen 1600 und 1900 °C durchgeführt wird.

9. Verfahren nach Anspruch 6, wobei das Sintern bei einem Druck von 40 bis 100 MPa durchgeführt wird.

## Claims

1. Part (1) made of a ternary ceramic-ceramic compound material TiC-NbC-Al₂O₃, **characterized in that** it consists of TiC in a proportion of 74% to 95% by weight relative to the total weight of said material, NbC in a proportion of 0.1% to 5% by weight relative to the total weight of said material, and Al₂O₃ in a proportion of 1 to 25% by weight relative to the total weight of said material.

2. Part (1) according to claim 1, having a Vickers hardness equal to or greater than 1700 HV, preferably equal to or greater than 2000 HV.

3. Part (1) according to claim 1, having a porosity of less than 1%, and preferably less than or equal to 0.2%.

4. Part (1) according to claim 1, having a K1c toughness of between 5 and 7 MPa.m^{1/2}.

5. Method for manufacturing a part (1) made of a ceramic-ceramic composite material according to any of claims 1 to 5, which comprises a step of heating up to the sintering temperature, then a step of sintering, at said sintering temperature thus reached, by hot pressing of the SPS type (flash sintering) of a pulverulent mixture consisting of TiC in a proportion of 74% to 95% by weight relative to the total weight of said material, NbC in a proportion of 0.1% to 5% by weight relative to the total weight of said material, and Al₂O₃ in a proportion of 1 to 25% by weight relative to the total weight of said material, followed by a cooling step,
said method being **characterized in that**
- the sintering is SPS sintering, which is carried out at the sintering temperature of between 1450°C and 2150°C, and under a pressure of 10 to 200 MPa;
- the cooling is controlled to 800°C, with a cooling rate of less than or equal to 100°C/min while maintaining the pressing stress.

6. Method according to claim 5, wherein the hot pressing is uniaxial pressing.

7. Method according to claim, wherein the temperature rise rate is between 20°C/min and 600°C/min, and preferably between 50°C/min and 150°C/min.

8. Method according to claim 6, wherein the sintering is carried out at a temperature of between 1600 and 1900°C.

9. Method according to claim 6, wherein the sintering is carried out at a pressure of 40 to 100 MPa.
